# EUROPEAN PATENT SPECIFICATION

(11) **EP 1 695 574 B1**
(45) Date of publication and mention of the grant of the patent: **16.04.2008**
(21) Application number: 04766867.8
(22) Date of filing: 29.09.2004
(51) Int. Cl.: H04Q 7/28

(54) **Method and mobile station for implementing a talk group scan functionality in direct mode of operation**
Verfahren und Mobilstation zur Implementierung einer Sprachgruppenabtastfunktionalität im Direkt-Modus Betrieb
Procédé et station mobile pour l'implementation d'une fonctionalité de balayage de groupes de discussion dans un fonctionnement en mode direct

(30) Priority: 13.12.2003 GB 0328923
(43) Date of publication of application: 30.08.2006
(73) Proprietor: MOTOROLA, INC., Schaumburg, IL 60196 (US)
(72) Inventor: BAR, Eitan, Motorola Israel Ltd, 67899 Tel Aviv (IL); BERMAN, Leonid, Motorola Israel Ltd, 67899 Tel Aviv (IL); DORY, Dan, 67899 Tel Aviv (IL); TESHUVA, Ran, Motorola Israel Limited, 67899 Tel Aviv (IL)
(74) Representative: McCormack, Derek James
(86) International application number: PCT/EP2004/052367
(87) International publication number: WO 2005/057966

(56) References cited:
- US-A- 5 758 291
- US-B1- 6 298 058
- US-B1- 6 519 472
- "Terrestrial Trunked Radio (TETRA); Technical requirements for Direct Mode Operation (DMO); Part 3: Mobile Station to Mobile Station (MS-MS) Air Interface (AI) protocol; ETS 300 396-3" ETSI STANDARDS, EUROPEAN TELECOMMUNICATIONS STANDARDS INSTITUTE, SOPHIA-ANTIPO, FR, vol. TETRA, March 1998 (1998-03), XP014013136 ISSN: 0000-0001 cited in the application

## Description

### Technical Field

The invention relates to a method and mobile station of direct mode radio communication. In particular, it relates to group calls and other services for direct mode radio communication.

### Background

Digital voice and data communications that use Radio Frequencies (RF) as their transmission medium are conventionally classified into Private Mobile Radio (PMR) or Specialized Mobile Radio (SMR) technologies.

All the various implementations that evolved from these fundamental technologies are modelled around a network of static, interconnected ("Trunked") radio communication nodes, collectively known as a trunked radio network. This network is responsible for efficiently controlling and managing the available medium resources, specifically RF spectra and time division multiple access (TDMA) multiplexing, in order to maximise resource utilization, reliability and consistency.

Moreover, the network is responsible for synchronizing the various radio terminals (mobile stations, or MS) both in terms of frequency and timing, to allocate the medium resources to each MS individually and to funnel all the signals between MSs through the network paths.

In order to supplement this primary model in cases where access to the trunked network system is not available (for example due to range, capacity or operational considerations) a complementary communication model was developed, namely, the "Direct" radio link. As opposed to the trunked radio network, the direct radio link relegates the controlling duties of the trunked system to the MS initiating the direct radio link.

However, unsurprisingly not all the facilities that a central trunked system is capable of providing in a trunked mode of operation (TMO) can easily be replicated in the supplementary direct mode of operation (DMO), even if these facilities are highly desirable.

The purpose of the present invention is to provide one such facility in direct mode operation, namely a DMO talk group scan functionality.

US-A-5,758,291 describes a communication system in which details of different communication groups are stored by communication units for the purpose of scanning for activity amongst members of the groups. The system is a trunked system in which communications take place via base stations. This reference does not disclose or suggest the invention to be described herein which is for use in direct mode communication.

### Summary of the Invention

In a first aspect, the present invention provides a method as defined in claim 1 of the accompanying claims.

In a second aspect, the present invention provides a mobile station, as defined in claim 13 of the accompanying claims.

Further features of the present invention are as defined in the dependent claims.

### Brief description of the drawings

FIG. 1 is a schematic diagram depicting mobile stations belonging to one or more of three user groups, in accordance with an embodiment of the present invention.
FIG. 2 is a schematic diagram depicting mobile stations bellowing to one or more of three user groups, and wherein a first mobile station initiates a call, in accordance with an embodiment of the present invention.
FIG. 3 is a schematic diagram depicting mobile stations bellowing to one or more of three user groups, and wherein a second mobile station initiates a call, in accordance with an embodiment of the present invention.

### Detailed description

A method of DMO service scanning is disclosed. This method is not limited to any particular PMR or SMR device, but for the sake of clarity the following description is given with reference to the ETSI TErrestrial Trunked RAdio (TETRA) standard (see www.etsi.org).

According to the current TETRA standard, a TETRA MS operating in direct mode monitors its channel for activity relating to the user group to which it belongs (e.g. a set of one or more associated MSs which share the same group address).

In particular, a TETRA MS operating in Direct Mode on a selected RF channel, and while having no knowledge of the selected channel's state, continuously monitors this channel for any TETRA specific RF activity.

Once any TETRA specific RF activity is detected, the MS synchronizes with the first fully decoded TETRA direct mode synchronization burst (DSB). If this synchronization burst is addressed to the group that the MS is currently set to receive any calls or other TETRA services from, it joins the call or responds to the service.

Similarly, a TETRA MS that initiates a call or another TETRA service does so acting as a DMO master MS on its RF channel.

Thus in both DMO monitoring and DMO master roles, an MS abiding by the TETRA standard only addresses one channel and is consequently ignorant of any other TETRA activity that might be taking place on another RF channel, and which may be of interest to the user of the MS.

An example scenario is where a middle manager at a work site or a middle ranking officer in the armed forces typically has a role of relaying instructions down the chain of command.

If they have initiated a call to a group in order to relay instructions to their staff, then the manager or officer could not become aware of a higher-ranking manager or commander initiating a call to a group of middle ranking staff to which they belong being conducted at the same time, but which typically they would rather join.

In short, the current DMO communication methodology can break a chain of information or command because a DMO mobile handset will monitor and connect only over one channel at a time, and does not monitor activity from other channels whilst monitoring a specific one.

The present invention provides a method of multi channel scanning in direct mode operation. Such multi channel scanning enables, inter alia, a method of adapting the trunked feature 'talk group scan' (TGS) to direct mode operation.

In essence, TMO TGS monitors channel activity in the networked system and enables detectability and selection of other groups on other channels by an MS.

A novel method of DMO multi-channel scanning is now described below for a TETRA system in a DMO TGS scenario; the current TETRA DMO protocols, procedures and conventions described in the standard (see ETS 300 396-3 at http://www.etsi.org) are observed.

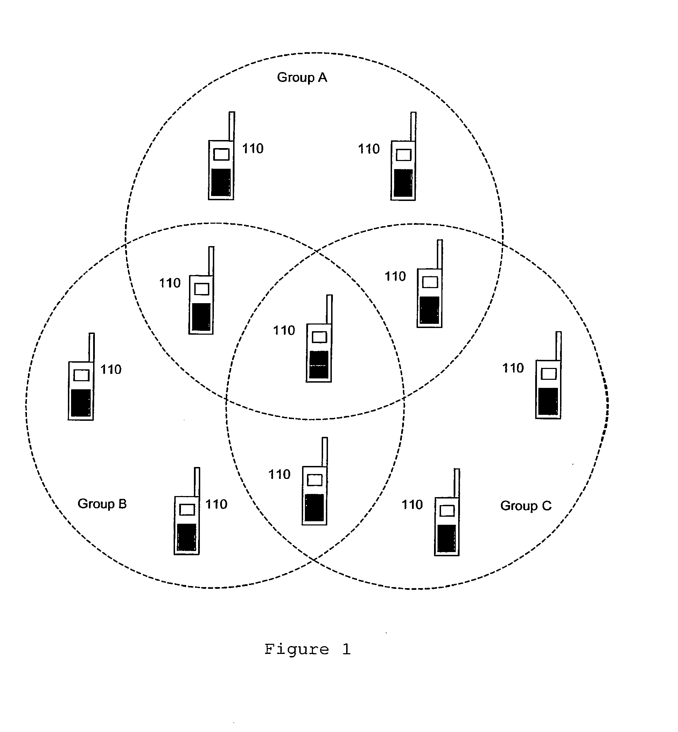

Referring to Figure 1, in an embodiment of the present invention, a plurality of MSs 110 is depicted arranged in a number of groups indicated as Group A, Group B and Group C. Each MS 110 maintains at least a first selectable DMO group set (DGS) to choose from, where a DGS comprises a list of groups and their respective direct mode RF channel. Selection may be automatic or by the user.

It is assumed that all the MSs 110 party to the various groups for a given scenario will use the same DGS.

Each group in a DGS is assigned a unique sequence number (USN) related to their position in the list.

An MS 110 conducts a channel surveillance procedure for those RF channels associated with the groups in the selected DGS whose channel state is free/unknown.

The TETRA DMO standard ETS 300 396-3, section 8.4.2.2.1 states:

A DM-MS which has just been switched into direct mode operation or following initial power up in direct mode shall conduct continuous monitoring of the selected DM radio frequency carrier in order to detect any DSBs (direct mode synchronization bursts) present and decode any layer 2 information available.

Continuous monitoring of the DM radio frequency carrier means that a DM-MS shall sample the DM radio frequency carrier at a sufficient rate so that the presence of a DSB may be determined.

A DM-MS shall conduct the procedure to determine the initial state of the DM radio frequency carrier over a period of at least 19 frame durations or until DSBs are detected.

In an embodiment of the present invention, rather than the single selected channel described in the TETRA DMO standard passage above, the surveillance procedure steps though the RF channels associated with the groups periodically, to determine if there is any RF activity. Any order of stepping through the RF channels is acceptable. For example, one such procedure involves taking five one-millisecond samples on consecutive group RF channels per frame.

By interleaving samplings of the RF channels in this manner, all the group channels are monitored essentially simultaneously until either at least a period of 19 frames (approximately 1 second) has elapsed or one or more DSBs are detected.

It will be clear to a person skilled in the art that in principle the surveillance procedure may continue indefinitely.

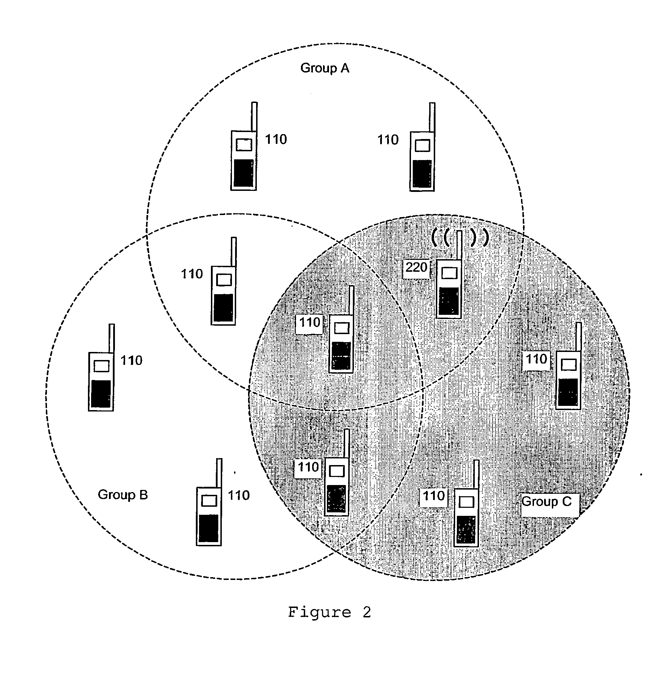

Referring now to Fig. 2, if there is currently no group activity on any of the surveyed channels, then the first TETRA call or service to start on any of the groups determines the physical and logical time division pattern (TDP) for all surveyed channels. An MS initiating such a call is called a master MS, depicted in Fig. 2 as MS 220. In the case of Fig 2, an MS 220 of a mid-ranking manager that is a member of two groups is depicted initiating a call to one of these groups.

The other TETRA MSs 110 detecting this activity, whether a member of the addressed group or more generally a member of the DGS, synchronise to this timing regime, adopting the same frame and slot numbering as the Master MS 220.

Having found a TETRA call or service from among the groups of the selected DGS, a second group channel survey mode is now employed:

An embodiment of the present invention exploits currently unassigned time slots available during a call or service, for example in TETRA time slot #3 on each of the Request Bit Map associated frames 1, 4, 7, 9, 10, 13, 15 and 16 (see ETS 300 396-3 sections 8.4.7.9 and 9.6.13).

Each Master MS 220 currently making a call will transmit a presence signal burst on a specific time slot in such a frame on its own RF channel, the specific frame being assigned according to the corresponding group position in the DGS. Thus for example, a Master MS 220 transmitting to a third group in a DGS will use a time slot in frame 7, whilst an MS transmitting to a seventh group in the DGS will use a time slot in frame 15. Any relationship that uniquely maps DGS group position to a specific time-slot is acceptable.

Typically, each slave or idle MS 110 (a slave MS is party to a call, while an idle MS is not) shall listen during these time slots to the relevant channel for a presence signal indicating activity in an alternative group.

Clearly, a Master MS 220 may also listen to the time slots of other groups than its own in a similar manner.

This method is referred to as the DMO Coupled Control Channel (DCCC).

In an alternative embodiment, a specific RF channel is assigned on which all Master MSs 220 transmit their presence signal bursts at the relevant times and to which all MSs listen at the relevant times. This method is referred to as the DMO Alternative Control Channel (DACC).

In both the DCCC and DACC cases, the first TETRA Master MS 220 signals all call or service recipients that the request bit map associated time slots are not available for random access requests (see ETS 300 396-3 section 9.6.13), leaving them reserved for the DCCC and DACC schemes described above.

Table 1 illustrates an example time division pattern for the DMO Coupled Control Channel method, for a DGS containing groups A-H:

**Table 1. Example TDP for DCCC method.**

| | | | | | | | | | | | | | | | | | | |
|---|---|---|---|---|---|---|---|---|---|---|---|---|---|---|---|---|---|---|
| Fr | Fn | Fn | Fn | Fn | Fn | Fn | Fn | Fn | Fn | Fn | Fn | Fn | Fn | Fn | Fn | Fn | Fn | RF channel |
| 1 | 2 | 3 | 4 | 5 | 6 | 7 | 8 | 9 | 10 | 11 | 12 | 13 | 14 | 15 | 16 | 17 | 18 | A |
| Fn | Fn | Fn | Fn | Fn | Fn | Fn | Fn | Fn | Fn | Fn | Fn | Fn | Fn | Fn | Fn | Fn | Fn | RF channel |
| 1 | 2 | 3 | 4 | 5 | 6 | 7 | 8 | 9 | 10 | 11 | 12 | 13 | 14 | 15 | 16 | 17 | 18 | B |
| Fn | Fn | Fn | Fn | Fn | Fn | Fn | Fn | Fn | Fn | Fn | Fn | Fn | Fn | Fn | Fn | Fn | Fn | RF channel |
| 1 | 2 | 3 | 4 | 5 | 6 | 7 | 8 | 9 | 10 | 11 | 12 | 13 | 14 | 15 | 16 | 17 | 18 | C |
| Fn | Fn | Fn | Fn | Fn | Fn | Fn | Fn | Fn | Fn | Fn | Fn | Fn | Fn | Fn | Fn | Fn | Fn | RF channel |
| 1 | 2 | 3 | 4 | 5 | 6 | 7 | 8 | 9 | 10 | 11 | 12 | 13 | 14 | 15 | 16 | 17 | 18 | D |
| Fn | Fn | Fn | Fn | Fn | Fn | Fn | Fn | Fn | Fn | Fn | Fn | Fn | Fn | Fn | Fn | Fn | Fn | RF channel |
| 1 | 2 | 3 | 4 | 5 | 6 | 7 | 8 | 9 | 10 | 11 | 12 | 13 | 14 | 15 | 16 | 17 | 18 | E |
| Fn | Fn | Fn | Fn | Fn | Fn | Fn | Fn | Fn | Fn | Fn | Fn | Fn | Fn | Fn | Fn | Fn | Fn | RF channel |
| 1 | 2 | 3 | 4 | 5 | 6 | 7 | 8 | 9 | 10 | 11 | 12 | 13 | 14 | 15 | 16 | 17 | 18 | F |
| Fn | Fn | Fn | Fn | Fn | Fn | Fn | Fn | Fn | Fn | Fn | Fn | Fn | Fn | Fn | Fn | Fn | Fn | RF channel |
| 1 | 2 | 3 | 4 | 5 | 6 | 7 | 8 | 9 | 10 | 11 | 12 | 13 | 14 | 15 | 16 | 17 | 18 | G |
| Fn | Fn | Fn | Fn | Fn | Fn | Fn | Fn | Fn | Fn | Fn | Fn | Fn | Fn | Fn | Fn | Fn | Fn | RF channel |
| 1 | 2 | 3 | 4 | 5 | 6 | 7 | 8 | 9 | 10 | 11 | 12 | 13 | 14 | 15 | 16 | 17 | 18 | H |

Table 2 below illustrates an example time division pattern for the DMO Alternative Control Channel method, for a DGS containing groups A-H:

**Table 2. Example TDP for DACC method.**

| | | | | | | | | | | | | | | | | | | |
|---|---|---|---|---|---|---|---|---|---|---|---|---|---|---|---|---|---|---|
| * | Fn | Fn | Fn | Fn | Fn | Fn | Fn | Fn | Fn | Fn | Fn | Fn | Fn | Fn | Fn | Fn | Fn | RF channel |
| | 2 | 3 | 4 | 5 | 6 | 7 | 8 | 9 | 10 | 11 | 12 | 13 | 14 | 15 | 16 | 17 | 18 | A |
| Fn | Fn | Fn | * | Fn | Fn | Fn | Fn | Fn | Fn | Fn | Fn | Fn | Fn | Fn | Fn | Fn | Fn | RF channel |
| 1 | 2 | 3 | | 5 | 6 | 7 | 8 | 9 | 10 | 11 | 12 | 13 | 14 | 15 | 16 | 17 | 18 | B |
| Fn | Fn | Fn | Fn | Fn | Fn | * | Fn | Fn | Fn | Fn | Fn | Fn | Fn | Fn | Fn | Fn | Fn | RF channel |
| 1 | 2 | 3 | 4 | 5 | 6 | | 8 | 9 | 10 | 11 | 12 | 13 | 14 | 15 | 16 | 17 | 18 | C |
| Fn | Fn | Fn | Fn | Fn | Fn | Fn | Fn | * | Fn | Fn | Fn | Fn | Fn | Fn | Fn | Fn | Fn | RF channel |
| 1 | 2 | 3 | 4 | 5 | 6 | 7 | 8 | | 10 | 11 | 12 | 13 | 14 | 15 | 16 | 17 | 18 | D |
| Fn | Fn | Fn | Fn | Fn | Fn | Fn | Fn | Fn | * | Fn | Fn | Fn | Fn | Fn | Fn | Fn | Fn | RF channel |
| 1 | 2 | 3 | 4 | 5 | 6 | 7 | 8 | 9 | | 11 | 12 | 13 | 14 | 15 | 16 | 17 | 18 | E |
| Fn | Fn | Fn | Fn | Fn | Fn | Fn | Fn | Fn | Fn | Fn | Fn | * | Fn | Fn | Fn | Fn | Fn | RF channel |
| 1 | 2 | 3 | 4 | 5 | 6 | 7 | 8 | 9 | 10 | 11 | 12 | | 14 | 15 | 16 | 17 | 18 | F |
| Fn | Fn | Fn | Fn | Fn | Fn | Fn | Fn | Fn | Fn | Fn | Fn | Fn | Fn | * | Fn | Fn | Fn | RF channel |
| 1 | 2 | 3 | 4 | 5 | 6 | 7 | 8 | 9 | 10 | 11 | 12 | 13 | 14 | | 16 | 17 | 18 | G |
| Fn | Fn | Fn | Fn | Fn | Fn | Fn | Fn | Fn | Fn | Fn | Fn | Fn | Fn | Fn | * | Fn | Fn | RF channel |
| 1 | 2 | 3 | 4 | 5 | 6 | 7 | 8 | 9 | 10 | 11 | 12 | 13 | 14 | 15 | | 17 | 18 | H |
| Fn | Fn | Fn | Fn | Fn | Fn | Fn | Fn | Fn | Fn | Fn | Fn | Fn | Fn | Fn | Fn | Fn | Fn | Alternative |
| 1 | 2 | 3 | 4 | 5 | 6 | 7 | 8 | 9 | 10 | 11 | 12 | 13 | 14 | 15 | 16 | 17 | 18 | channel |

In Tables 1 and 2 above, frames 6, 12, and 18 are used by the master MSs for synchronisation, as per the TETRA standard.

If a DGS in a TETRA system comprises more than 8 groups, other time slots may be utilised (for example, time slot 3 of frames 2, 5, 8, 11, 14 and 17 above, normally reserved for slave or idle but occupied MSs, and wherein any clashes that may occur from the slave or idle MSs perspective are recoverable by retransmission processes within the standard).

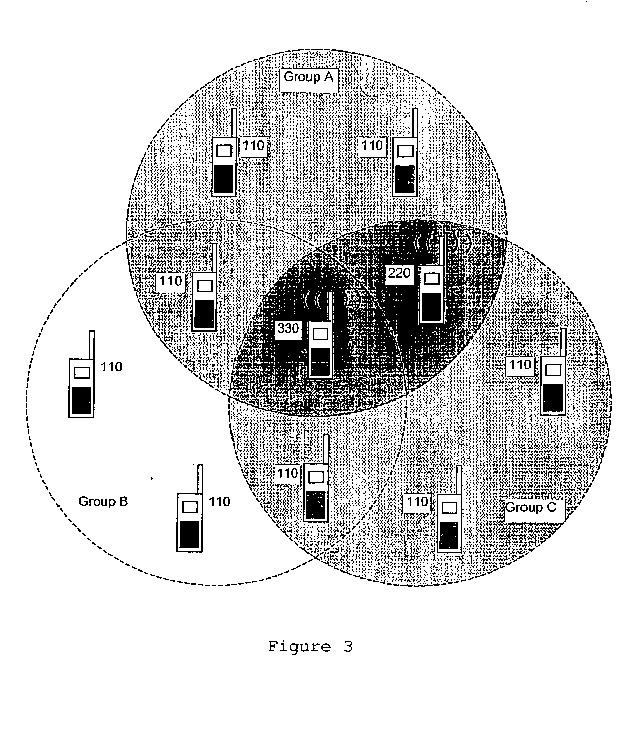

Referring finally to Fig. 3, an MS 330 of a high-ranking manager is depicted initiating a call or service to a group comprising the mid-ranking manager's MS 220, but different to that group to which the mid-ranking manager's MS 220 itself is making a call.
When an additional active group is detected, the MS (110, 220) may alert the user to the activity. However, a number of strategies are possible in this regard. For example, groups within the DGS may be assigned a rank, so that activity on a high ranking group results in automatic switching from lower ranking calls to that group (in accordance with the prevailing standard procedures), or in prioritising channel activity information to the user.

In a similar vein, individual master MSs corresponding to key personnel, identified via their presence signal burst, may be ranked in a similar manner for switching or information purposes.

Finally, not all MSs may be granted access to all groups in the DGS, and so not alert their users to activities in these groups. Indeed, in an alternative embodiment of the present invention, an MS (110, 220) will only monitor those time slots in the DCCC and DACC schemes relevant to groups that they are entitled to join.

In the scenario of Fig.3, therefore, the mid-ranking manager may be made aware of the high-ranking manager's call, and may wish to end his or her own call to join. Thus the chain of information or command can be maintained in direct mode operation in this scenario.

In the event of an undesired presence signal burst (i.e. an unexpected target address in a specific time slot) for example caused by an MS coming within range that does not share the common DGS, then a TETRA MS (110, 220, 330) shall activate an appropriate counter to time out the undesired call/service. Similarly, if unexpected messages are decoded or messages are not received when expected (e.g due to cyclic redundancy check, or CRC errors), other counters shall be started to time out the service. All other DMO timers and counters are retained and handles as per the TETRA DMO standard.

It will be understood that the method of direct mode radio communication as described above, provides at least one or more of the following advantages in direct mode operation:
i. MSs are able to scan multiple channels when there are currently no group calls or services;
ii. MSs are able to scan multiple channels when there are currently one or more group calls or services;
iii. MSs can inform the user about calls or services occurring on other channels, or automatically switch to more important calls or services.
iv. Chains of information or command are not necessarily broken by ignorance of other channel activity.

## Claims

1. A method of operation in each of a plurality of mobile stations for radio communication, the method including each mobile station (110) maintaining at least a first communication group set comprising an ordered list of two or more user groups for the purpose of scanning for radio frequency activity among some or all of said groups; and conducting a surveillance procedure periodically to determine if there is any radio frequency activity comprising a communication amongst the group; **characterised in that** the group set maintained by the mobile station (110) comprises user groups (A-C) which communicate by direct mode communication together with an associated direct mode radio frequency channel for each group, and that the mobile station periodically applies a surveillance procedure to detect radio frequency activity comprising a direct mode communication in any of the groups of the ordered list, the surveillance procedure including listening in turn during specific time slots linked to specific groups (A-C) for a presence signal issued by a master mobile station of each specific group (A-C).

2. A method according to claim 1 wherein each mobile station is operable in the surveillance procedure to step through the different channels consecutively to detect RF activity.

3. A method according to claim 2 wherein each mobile station is operable in the surveillance procedure to sample all of the channels within a period of 19 frames.

4. A method according to any one of claims 1 to 3 wherein multiple samples are taken for each channel sampling.

5. A method according to any one of the preceding claims wherein each of a plurality of mobile stations when communicating as a master station in a specific group issues a presence signal on a direct mode radio frequency channel associated with the specific group in a time slot linked with that group and the presence signal is detected by a mobile station applying its surveillance procedure.

6. A method according to any one of claims 1 to 4, wherein each of a plurality of mobile stations when communicating as a master station in a specific group issues a presence signal on a single direct mode radio frequency channel which is alternative to the frequency channels associated with all of the groups in a time slot linked with the specific group and the presence signal is detected by a mobile station applying its surveillance procedure.

7. A method according to any one of the preceding claims, wherein if there is currently no group activity on any of the surveyed channels, then a mobile station acting as a first master mobile station initiating a call or service to start in any of the groups determines a physical and logical time division pattern for all surveyed frequency channels.

8. A method according to claim 7, wherein all other mobile stations detecting a first call or service synchronise to the time division pattern, adopting the same frame and slot numbering as the first master mobile station.

9. A method according to any one of the preceding claims, wherein the specific time slot in which each master mobile station transmits a presence signal is related to the position, within a common ordered list of the groups, of the group that the master mobile station is communicating with.

10. A method according to any one of the preceding claims wherein the specific time slot in which each master mobile station transmits a presence signal is within a dedicated bit map frame of a TETRA direct mode timing sequence.

11. A method of direct mode radio communication according to claim 10 wherein each master mobile station signals all call or service recipients that the TETRA request bit map associated time slots are not available for random access requests.

12. A method according to any one of the preceding claims wherein the surveillance procedure is carried out by each mobile station which is a slave or idle mobile station or a master mobile station.

13. A mobile station operable as one of the mobile stations in the method of claim 1, the mobile station (110) including storage means for storing at least a first communication group set comprising an ordered list of two or more user groups for the purpose of scanning for radio frequency activity among some or all of said groups; and being operable to conduct a surveillance procedure periodically to determine if there is any radio frequency activity comprising a communication amongst the group; **characterised in that** the storage means is operable to maintain a group set which comprises user groups (A, B, C) which communicate by direct mode communication together with an associated direct mode radio frequency channel for each group, and that the mobile station is operable periodically to apply a surveillance procedure to detect radio frequency activity comprising a direct mode communication in any of the groups of the ordered list, the surveillance procedure including listening in turn during specific time slots linked to specific groups for a presence signal issued by a master mobile station of each specific group.

14. A mobile station according to claim 13 and operable in the method of claim 5, the mobile station being operable when communicating as a master station in a specific group to issue a presence signal on a direct mode radio frequency channel associated with the specific group in a time slot linked with that group.

15. A mobile station according to claim 13 and operable in the method of claim 6, the mobile station being operable when communicating as a master station in a specific group to issue a presence signal on a single direct mode radio frequency channel which is alternative to the frequency channels associated with all of the groups in a time slot linked with the specific group.

## Patentansprüche

1. Betriebsverfahren in jeder einer Mehrzahl von Mobilstationen zur Funkkommunikation, wobei das Verfahren umfasst, dass jede Mobilstation (110) mindestens einen ersten Kommunikationsgruppensatz aufrechterhält, der eine geordnete Liste von zwei oder mehr Anwendergruppen zu dem Zweck umfasst, nach Funkfrequenzaktivitäten zwischen einigen oder allen der Gruppen abzutasten; und ein periodisches Durchführen eines Überwachungsverfahrens, um zu bestimmen, ob es irgendeine Funkfrequenzaktivität gibt, die eine Kommunikation zwischen den Gruppen umfasst; **dadurch gekennzeichnet, dass** der durch die Mobilstation (110) aufrechterhaltene Gruppensatz Anwendergruppen (A - C) umfasst, die durch eine Direktbetriebsartkommunikation zusammen mit einem verknüpften Direktbetriebsartfunkfrequenzkanal für jede Gruppe kommunizieren, und dass die Mobilstation periodisch in Überwachungsverfahren anwendet, um eine Funkfrequenzaktivität zu erfassen, die eine Direktbetriebsartkommunikation in einer beliebigen der Gruppen der geordneten Liste umfasst, wobei das Überwachungsverfahren wiederum während spezifischer Zeitschlitze, die mit spezifischen Gruppen (A - C) verbunden sind, nach einem Anwesenheitssignal horcht, das durch eine Master-Mobilstation einer jeden spezifischen Gruppe (A - C) ausgegeben wird.

2. Verfahren gemäß Anspruch 1, wobei jede Mobilstation in dem Überwachungsverfahren betreibbar ist, um nacheinander durch die verschiedenen Kanäle zu schreiten, um eine RF-Aktivität zu erfassen.

3. Verfahren gemäß Anspruch 2, wobei jede Mobilstation in dem Überwachungsverfahren betreibbar ist, um alle von den Kanälen innerhalb einer Periode von 19 Rahmen abzutasten.

4. Verfahren gemäß einem der Ansprüche 1 bis 3, wobei für jede Kanalabtastung mehrere Abtastwerte genommen werden.

5. Verfahren gemäß einem der vorangehenden Ansprüche, wobei jede einer Mehrzahl von Mobilstationen, wenn sie als eine Master-Station in einer spezifischen Gruppe kommuniziert, ein Anwesenheitssignal auf einem Direktbetriebsartfunkfrequenzkanal, der mit der spezifischen Gruppe verknüpft ist, in einem Zeitschlitz, der mit dieser Gruppe verbunden ist, ausgibt und das Anwesenheitssignal durch eine Mobilstation erfasst wird, die ihr Überwachungsverfahren anwendet.

6. Verfahren gemäß einem der Ansprüche 1 bis 4, wobei jede einer Mehrzahl von Mobilstationen, wenn sie als eine Master-Station in einer spezifischen Gruppe kommuniziert, ein Anwesenheitssignal, alternativ zu den Frequenzkanälen, die mit allen von den Gruppen verknüpft sind, auf einem einzelnen Direktbetriebsartfunkfrequenzkanal in einem Zeitschlitz, der mit der spezifischen Gruppe verknüpft ist, ausgibt und das Anwesenheitssignal durch eine Mobilstation erfasst wird, die ihr Überwachungsverfahren durchführt.

7. Verfahren gemäß einem der vorangehenden Verfahren, wobei, wenn es gegenwärtig keine Gruppenaktivität auf irgendeinem der überwachten Kanäle gibt, eine Mobilstation, die als eine erste Master-Mobilstation agiert, die initiiert, dass ein Anruf oder Dienst in irgendeiner der Gruppen beginnt, ein physikalisches und logisches Zeitteilungsmuster für alle überwachten Frequenzkanäle bestimmt.

8. Verfahren gemäß Anspruch 7, wobei sich alle anderen Mobilstationen, die einen ersten Anruf oder Dienst erfassen, auf das Zeitteilungsmuster synchronisieren, wobei sie die selbe Rahmen- und Schlitznummerierung wie die erste Master-Mobilstation annehmen.

9. Verfahren gemäß einem der vorangehenden Ansprüche, wobei sich der spezifische Zeitschlitz, in dem jede Master-Mobilstation ein Anwesenheitssignal überträgt, auf den Standort der Gruppe, innerhalb einer gemeinsamen geordneten Liste der Gruppen, bezieht, mit der die Master-Mobilstation kommuniziert.

10. Verfahren gemäß einem der vorangehenden Ansprüche, wobei sich der spezifische Zeitschlitz, in dem jede Master-Mobilstation ein Anwesenheitssignal überträgt, in einem dedizierten Bitmap-Rahmen einer TETRA-Direktbetriebsart-Timing-Sequenz befindet.

11. Verfahren einer Direktbetriebsartfunkkommunikation gemäß Anspruch 10, wobei jede Master-Mobilstation allen Anruf- oder Dienstempfängern signalisiert, dass die mit TETRA-Anforderungs-Bitmaps verknüpften Zeitschlitze nicht für Direktzugriffsanforderungen zur Verfügung stehen.

12. Verfahren gemäß einem der vorangehenden Ansprüche, wobei das Überwachungsverfahren durch jede Mobilstation ausgeführt wird, die eine Slave-Mobilstation, eine in einem Ruhezustand befindliche Mobilstation, oder eine Master-Mobilstation ist.

13. Mobilstation, die als eine der Mobilstationen in dem Verfahren von Anspruch 1 betreibbar ist, wobei die Mobilstation (110) umfasst: Speicherungsmittel zum Speichern mindestens eines ersten Kommunikationsgruppensatzes, der eine geordnete Liste von zwei oder mehr Anwendergruppen zu dem Zweck umfasst, nach Funkfrequenzaktivitäten zwischen einigen oder allen der Gruppen abzutasten; und betreibbar ist, um periodisch ein Überwachungsverfahren durchzuführen, um zu bestimmen, ob es irgendeine Funkfrequenzaktivität gibt, die eine Kommunikation zwischen den Gruppen umfasst; **dadurch gekennzeichnet, dass** das Speicherungsmittel betreibbar ist, um einen Gruppensatz aufrechtzuerhalten, der Anwendergruppen (A, B, C) umfasst, die durch eine Direktbetriebsartkommunikation zusammen mit einem verknüpften Direktbetriebsartfunkfrequenzkanal für jede Gruppe kommunizieren, und **dadurch**, dass die Mobilstation periodisch betreibbar ist, um ein Überwachungsverfahren anzuwenden, um eine Funkfrequenzaktivität, die eine Direktbetriebsartkommunikation umfasst, in irgendeiner der Gruppen der geordneten Liste zu erfassen, wobei das Überwachungsverfahren umfasst: Horchen wiederum während spezifischer Zeitschlitze, die mit spezifischen Gruppen verbunden sind, nach einem Anwesenheitssignal, das durch eine Master-Mobilstation einer jeden Gruppe ausgegeben wird.

14. Mobilstation gemäß Anspruch 13 und betreibbar in dem Verfahren von Anspruch 5, wobei die Mobilstation, wenn sie als eine Master-Station in einer spezifischen Gruppe kommuniziert, betreibbar ist, um ein Anwesenheitssignal auf einem Direktbetriebsartfunkfrequenzkanal, der mit der spezifischen Gruppe verknüpft ist, in einem Zeitschlitz, der mit dieser Gruppe verbunden ist, auszugeben.

15. Mobilstation gemäß Anspruch 13 und betreibbar in dem Verfahren von Anspruch 6, wobei die Mobilstation, wenn sie als eine Master-Station in einer spezifischen Gruppe kommuniziert, betreibbar ist, um ein Anwesenheitssignal, alternativ zu den Frequenzkanälen, die mit all den Gruppen verknüpft sind, auf einem einzelnen Direktbetriebsartfunkfrequenzkanal in einem Zeitschlitz auszugeben, der mit der spezifischen Gruppe verbunden ist.

## Revendications

1. Procédé de fonctionnement dans chacune d'une pluralité de stations mobiles pour des radiocommunications, le procédé comprenant les étapes selon lesquelles chaque station mobile (110) tient à jour au moins un premier ensemble de groupes de communication comprenant une liste ordonnée de deux groupes d'utilisateurs ou plus dans le but de rechercher des activités radiofréquence par balayage parmi certains ou la totalité desdits groupes ; et exécute périodiquement une procédure de surveillance pour déterminer s'il y a une quelconque activité radiofréquence, comprenant une communication dans le groupe ; **caractérisé en ce que** l'ensemble de groupes tenu à jour par la station mobile (110) comprend des groupes d'utilisateurs (A - C) qui communiquent par un mode de communication direct, avec un canal de radiofréquence à mode direct associé pour chaque groupe, et **en ce que** la station mobile applique périodiquement une procédure de surveillance pour détecter une activité radiofréquence, comprenant une communication en mode direct dans l'un quelconque des groupes de la liste ordonnée, la procédure de surveillance comprenant une écoute à tour de rôle pendant des tranches de temps spécifiques attachées à des groupes spécifiques (A - C) pour détecter un signal de présence émis par une station mobile maîtresse de chaque groupe spécifique (A - C).

2. Procédé selon la revendication 1, dans lequel chaque station mobile fonctionne, dans la procédure de surveillance, de façon à avancer à travers les différents canaux consécutivement pour détecter une activité RF.

3. Procédé selon la revendication 2, dans lequel chaque station mobile fonctionne, dans la procédure de surveillance, de façon à échantillonner la totalité des canaux dans une période de 19 trames.

4. Procédé selon l'une quelconque des revendications 1 à 3, dans lequel plusieurs échantillons sont pris pour chaque échantillonnage de canal.

5. Procédé selon l'une quelconque des revendications précédentes, dans lequel chacune d'une pluralité de stations mobiles, lorsqu'elle communique en tant que station maîtresse dans un groupe spécifique, émet un signal de présence sur un canal de radiofréquence à mode direct associé au groupe spécifique, dans une tranche de temps attachée à ce groupe, et le signal de présence est détecté par une station mobile appliquant sa procédure de surveillance.

6. Procédé selon l'une quelconque des revendications 1 à 4, dans lequel chacune d'une pluralité de stations mobiles, lorsqu'elle communique en tant que station maîtresse dans un groupe spécifique, émet un signal de présence sur un unique canal de radiofréquence à mode direct, qui est différent des canaux de fréquence associés à tous les groupes, dans une tranche de temps attachée au groupe spécifique, et le signal de présence est détecté par une station mobile appliquant sa procédure de surveillance.

7. Procédé selon l'une quelconque des revendications précédentes, dans lequel, s'il n'y a actuellement aucune activité de groupe sur l'un quelconque des canaux inspectés, alors une station mobile agissant en tant que première station mobile maîtresse initiant un appel ou un service à démarrer dans l'un quelconque des groupes détermine un plan de répartition temporelle physique et logique pour tous les canaux de fréquence inspectés.

8. Procédé selon la revendication 7, dans lequel toutes les autres stations mobiles détectant un premier appel ou service se synchronisent sur le plan de répartition temporelle, en adoptant la même numérotation de trames et de tranches de temps que la première station mobile maîtresse.

9. Procédé selon l'une quelconque des revendications précédentes, dans lequel la tranche de temps spécifique dans laquelle chaque station mobile maîtresse transmet un signal de présence est associée à la position, dans une liste ordonnée commune des groupes, du groupe avec lequel la station mobile maîtresse communique.

10. Procédé selon l'une quelconque des revendications précédentes, dans lequel la tranche de temps spécifique dans laquelle chaque station mobile maîtresse transmet un signal de présence se trouve dans une trame à topogramme binaire dédié d'une séquence de synchronisation en mode direct TETRA.

11. Procédé de radiocommunication en mode direct selon la revendication 10, dans lequel chaque station mobile maîtresse signale à tous les destinataires d'appel ou de service que les tranches de temps associée au topogramme binaire de demandes TETRA ne sont pas disponibles pour des demandes d'accès aléatoire.

12. Procédé selon l'une quelconque des revendications précédentes, dans lequel la procédure de surveillance est exécutée par chaque station mobile qui est une station mobile esclave ou en veille ou une station mobile maîtresse.

13. Station mobile pouvant être utilisée en tant que l'une des stations mobiles dans le procédé de la revendication 1, la station mobile (110) comprenant des moyens de stockage pour stocker au moins un premier ensemble de groupes de communication comprenant une liste ordonnée de deux groupes d'utilisateurs ou plus dans le but de rechercher des activités radiofréquence par balayage parmi certains ou la totalité desdits groupes ; et pouvant être utilisée pour exécuter périodiquement une procédure de surveillance pour déterminer s'il y a une quelconque activité radiofréquence, comprenant une communication dans le groupe ; **caractérisé en ce que** les moyens de stockage peuvent être utilisés pour tenir à jour un ensemble de groupes qui comprend des groupes d'utilisateurs (A, B, C) qui communiquent par un mode de communication direct, avec un canal de radiofréquence à mode direct associé pour chaque groupe, et **en ce que** la station mobile peut être utilisée pour appliquer périodiquement une procédure de surveillance pour détecter une activité radiofréquence, comprenant une communication en mode direct dans l'un quelconque des groupes de la liste ordonnée, la procédure de surveillance comprenant une écoute à tour de rôle pendant des tranches de temps spécifiques attachées à des groupes spécifiques pour détecter un signal de présence émis par une station mobile maîtresse de chaque groupe spécifique.

14. Station mobile selon la revendication 13, et pouvant être utilisée dans le procédé selon la revendication 5, la station mobile fonctionnant de façon que, lorsqu'elle communique en tant que station maîtresse dans un groupe spécifique, elle émette un signal de présence sur un canal de radiofréquence à mode direct associé au groupe spécifique, dans une tranche de temps attachée à ce groupe.

15. Station mobile selon la revendication 13, et pouvant être utilisée dans le procédé selon la revendication 6, la station mobile fonctionnant de façon que, lorsqu'elle communique en tant que station maîtresse dans un groupe spécifique, elle émette un signal de présence sur un unique canal de radiofréquence à mode direct, qui est différent des canaux de fréquence associés à tous les groupes, dans une tranche de temps attachée au groupe spécifique.
